# FASCICULE DE BREVET EUROPEEN

(11) **EP 2 379 838 B1**
(45) Date de publication et mention de la délivrance du brevet: **20.02.2013**
(21) Numéro de dépôt: 09801233.9
(22) Date de dépôt: 16.12.2009
(51) Int. Cl.: E21B 33/12, E21B 41/00

(54) **MÉTHODE D'OBTURATION DES PUITS DE STOCKAGE**
VERFAHREN ZUM VERSCHLIESSEN EINES SPEICHERBOHRLOCHS
METHOD FOR BLOCKING A STORAGE WELL

(30) Priorité: 16.12.2008 FR 0807053
(43) Date de publication de la demande: 26.10.2011
(73) Titulaire: IFP Energies nouvelles, 92852 Rueil-Malmaison Cedex (FR)
(72) Inventeur: CANGEMI, Laurent, F-78380 Bougival (FR); HERZHAFT, Benjamin, F-92150 Suresnes (FR); LECOLIER, Eric, F-92370 Chaville (FR); LONGAYGUE, Xavier, F-78390 Bois d'Arcy (FR); PASQUIER, David, F-92150 Suresnes (FR); VINCKE, Olivier, F-95110 Sannois (FR); WITTRISCH, Christian, F-92500 Rueil-Malmaison (FR)
(86) Numéro de dépôt international: PCT/FR2009/001429
(87) Numéro de publication internationale: WO 2010/076416

(56) Documents cités:
- WO-A1-2004/007898
- FR-A1- 2 864 139
- GB-A- 2 279 732
- JP-A- 2005 350 980
- US-A- 2 683 690
- US-A- 2 836 555
- US-A- 4 736 796
- US-A- 4 919 989
- US-A- 5 667 010
- US-A- 5 810 085

## Description

La présente invention concerne le domaine des stockages géologiques des gaz acides, dont le CO₂. En particulier, l'invention concerne la fermeture des puits donnant accès aux formations géologiques dans lesquelles le stockage a eu lieu par injection. Un des objectifs est de prévenir les fuites de gaz acides, par exemple de CO₂, par lesdits puits ou par son voisinage.

On connaît les procédures d'abandon de puits dans lesquelles on introduit des bouchons de différentes qualités dans les cuvelages du puits : des bouchons mécaniques en matériau expansible, des bouchons de ciment ou encore de résine. Cependant, la durabilité de ces matériaux, ainsi que du tube de cuvelage soumis à la corrosion, n'est pas suffisante dans le cas de stockage de gaz acides, notamment du CO₂.

On connaît aussi les injections sous pression ("squeeze") de produits spécifiques de colmatage par les perforations du puits afin d'obturer la formation poreuse et perméable. Cependant, on sait qu'il est difficile de maîtriser le placement de ces produits injectés, ce qui rend aléatoire l'efficacité du colmatage.

L'art antérieur décrit ci-dessus, notamment dans les documents FR 2864139, US 4919989, US 4736796 et US 5667010, concerne plus particulièrement les puits de production pétroliers mais n'est pas directement applicable pour l'abandon de puits utilisés pour le stockage de CO₂ en raison de la pression importante à la fin de l'injection de stockage du CO₂ contrairement aux réservoirs pétroliers dont la pression au moment de l'abandon est plus faible que celle présente à l'origine de l'exploitation. De plus, l'échelle de temps considérée pour ces opérations de stockage peut atteindre plusieurs siècles.

Il n'existe pas à l'heure actuelle de réglementation spécifique pour le bouchage et la fermeture des puits de stockage de CO₂.

Si une fuite apparaissait sur un puits de stockage de CO₂ abandonné, la solution spontanément envisagée sera de tenter de restaurer, ou compléter l'obturation du puits avec du ciment. Le coût du rebouchage d'un puits est très important, auquel s'ajoute les frais de localisation de la fuite de CO₂.

Il y a donc une nécessité de fournir une méthode, et les moyens associés, de bouchage des puits forés dans des stockages géologiques de CO₂. Bien entendu, cette méthode et moyens associés sont applicables dans toutes les situations d'abandon de puits forés dans un réservoir naturel ou artificiel.

Un des objets de cette invention est de proposer un ensemble de solutions pour boucher les puits présents sur un site de stockage de CO₂, et notamment à la fin de la phase d'injection pour garantir une étanchéité définitive et sécurisée de ces puits.

Ainsi, la présente, invention concerne une méthode d'obturation d'un puits foré dans une roche réservoir sous-jacente à une couche de roche constitutive d'une couverture. On effectue les étapes suivantes :
- on identifie dans le puits le niveau de la couverture,
- on remplit ledit puits de particules de matériaux argileux au droit de ce niveau,
- on compacte lesdites particules de façon à reconstituer la couche constitutive de la couverture.

On peut effectuer un élargissement du puits au niveau de la couverture.

Le puits peut être cuvelé par un tube cimenté dans le puits, l'élargissement consistant à ouvrir une fenêtre dans le cuvelage, détruire la cimentation et aléser la roche couverture sur une hauteur déterminée.

Le fond du puits peut être obturé par du ciment.

Les particules de matériaux argileux peuvent être compactées sous forme de billes, cylindres, poudres, granulés ou leurs mélanges.

Les particules de matériaux argileux peuvent être mises en place dans l'élargissement dans un état déshydraté.

Les particules de matériaux argileux peuvent comporter des moyens de contrôle d'hydratation différée, par exemple des inhibiteurs de gonflement d'argiles, ou des enrobages hydrosolubles.

Les particules de matériaux argileux peuvent être compactées en cours de réhydratation.

Les particules de matériaux argileux peuvent être compactées en utilisant des poids descendus dans le puits.

Les particules de matériaux argileux peuvent être compactées en utilisant un piston disposé au-dessus des particules et activé par pression hydraulique dans le puits.

Les particules de matériaux argileux peuvent être choisies à partir d'une caractérisation de la roche couverture par analyse chimique, minéralogique et pétrophysique des débris de forage.

L'invention concerne également l'application de la méthode au bouchage de puits d'injection de CO₂ dans un réservoir souterrain.

Un puits destiné au stockage du CO₂ est classiquement foré et complété par un tube (tubing) d'injection raccordé à un obturateur annulaire (packer). La formation géologique utilisée pour le stockage géologique du CO₂ est, soit un aquifère ayant une extension suffisante pour permettre l'injection sur une durée de quelques dizaines d'années, soit un réservoir pétrolier épuisé. Un contrôle de la pression du fluide injecté au niveau de la formation géologique assure que la formation n'est pas soumise à une pression excessive pour éviter la fracturation des couches au toit du réservoir.

En fin de période d'injection, le stockage étant destiné à être irréversible, les puits d'injection doivent être définitivement obturés.

Certains ciments produits industriellement ont des propriétés chimiques, hydrauliques et mécaniques qui peuvent se dégrader au cours du temps, entraînant leur altération, des possibilités de rupture mécanique avec, *in fine,* une perte de l'étanchéité au niveau du puits. Outre la dégradation des matériaux cimentaires classiques lorsqu'ils sont soumis à une circulation de fluides riches en CO₂, le risque de perte d'étanchéité provient en grande partie des interfaces ciments/métal/roche qui peuvent générer des fuites pour des raisons d'attaque chimique ou de sollicitation mécanique.

La présente invention propose de supprimer les points faibles que sont ces interfaces en reconstituant une barrière étanche compatible avec la roche couverture géologique naturelle. Pour cela, on utilise un matériau contenant principalement des minéraux argileux, ces minéraux argileux une fois compactés pouvant avoir une très faible perméabilité. La plasticité des argiles leur permet de se déformer sans rupture et de s'associer à la formation géologique initiale pour former avec celle-ci une interface saine et étanche.

Les matériaux argileux introduits dans le puits peuvent être compactés sous forme de billes, de boules, de boulettes, grains, cylindres ou de granulés qui se réhydratent en utilisant soit l'eau contenue dans la zone à colmater, soit l'eau utilisée pour le transport des billes, soit un volume d'eau spécifiquement mis en place aux abords immédiats de la zone à traiter. Au contact de l'eau, lesdites argiles s'hydratent en augmentant de volume. Les particules granulaires à base d'argiles compactées et maintenues sous pression suivant l'une des mises en oeuvre proposées s'associent entre elles pour former une masse argileuse homogène et structurée ayant des caractéristiques proches de celles de la formation géologique, et constituent ainsi une barrière étanche.

Le stockage de CO2 sur un site géologique est associé à des opérations d'injection pouvant se succéder sur une période de 10 à 30 ans. Dans le cas des aquifères salins profonds, la pression d'injection sera supérieure à la pression d'équilibre naturelle. Les scénarios actuels prévoient ainsi un gradient de pression important entre les zones proches des puits d'injection, lesquels seront soumis à une pression plus élevée que la pression initiale et les régions plus éloignées. D'une façon plus précise, le CO₂ pompé sous pression sera en phase supercritique, cette phase étant plus légère que l'eau, elle formera une bulle (ou un panache) de CO₂ au toit du réservoir, sous les couvertures argileuses, et donc proche des puits d'injection.

Le CO₂ peut avoir tendance à migrer le long, ou au travers, de la cimentation du cuvelage si la cimentation, étant déjà ancienne, est endommagée. Cette migration est favorisée par la lente corrosion du tubage en acier.

En outre, la variation du champ de pression au cours des années d'injection de CO₂ peut entraîner des déformations, subsidences ou expansions, de la formation géologique, ce qui peut avoir pour conséquence une fissuration de la gaine de ciment, donc une perte d'étanchéité, puis une migration du CO₂ vers les couches supérieures au toit du réservoir.

L'objet de l'invention est de constituer une barrière étanche la plus parfaite possible au toit du réservoir, en reconstituant l'intégrité de la couverture du stockage.

L'invention sera mieux comprise et ses avantages apparaîtront plus clairement à la lecture de la description suivante d'exemples de réalisation, nullement limitatifs, illustrés par les figures ci-après annexées, parmi lesquelles :
- la figure 1 montre schématiquement un puits d'injection de CO₂ dans un réservoir géologique,
- la figure 2 illustre un exemple d'abandon de puits selon l'art antérieur,
- les figures 3 à 5 montrent schématiquement le processus selon l'invention.

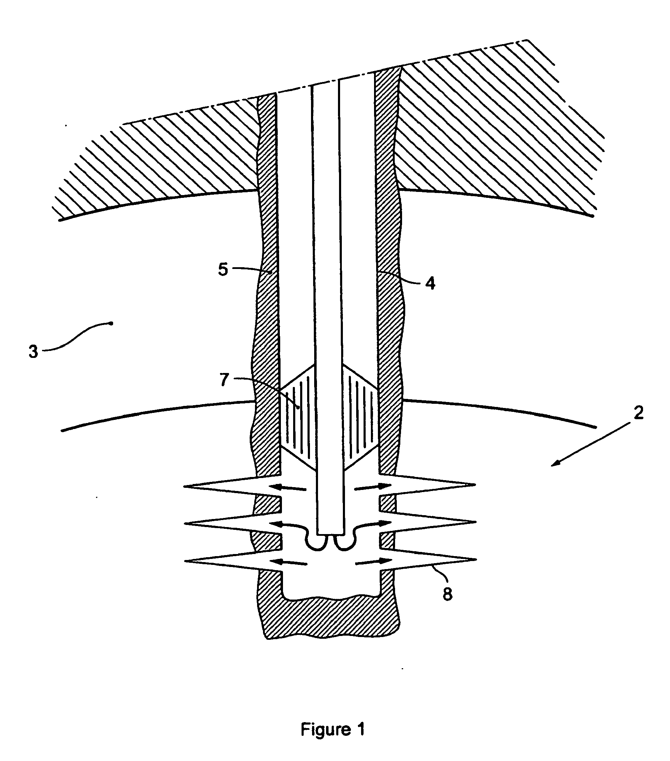

La figure 1 représente en coupe un exemple de puits d'injection 1 de CO₂ dans un aquifère 2. Le puits traverse une zone de couverture 3 comportant des couches de sédiments très imperméables, en général des argiles. Le puits est cuvelé par des tubes "casing" 4 cimenté par une gaine de ciment 5. Une conduite constituée de tubes d'injection 6 est descendue dans le puits cuvelé et l'annulaire formé par cette conduite d'injection et l'intérieur du cuvelage est fermée par un bouchon d'étanchéité "packer" 7. Des perforations 8 effectuées après les opérations de cimentation autorisent la communication entre l'intérieur du puits et la roche réservoir que constitue l'aquifère 2. Ainsi, la figure 1 illustre un exemple d'architecture d'un puits qui permet l'injection de CO₂ dans l'aquifère.

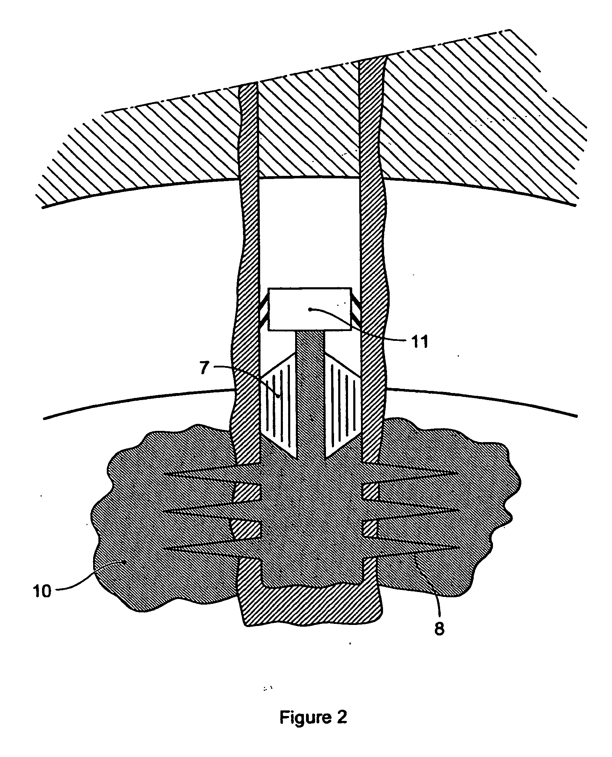

La figure 2 montre un exemple d'abandon de puits dans lequel un matériau cimentaire a été injecté dans le fond du puits pour être forcé ("squeeze") dans la formation 10 par les perforations 8. Toute la zone d'injection est ainsi colmatée, de même que le fond du puits, sous le packer 7. Le tube d'injection est ensuite retiré par dévissage d'un moyen de connexion approprié.

Pour des raisons de sécurité, il est souhaitable de sécuriser toutes les venues de fluides pouvant provenir de l'intérieur du tubage. Pour cela un bouchon permanent 11 est placé au-dessus du packer d'injection 7.

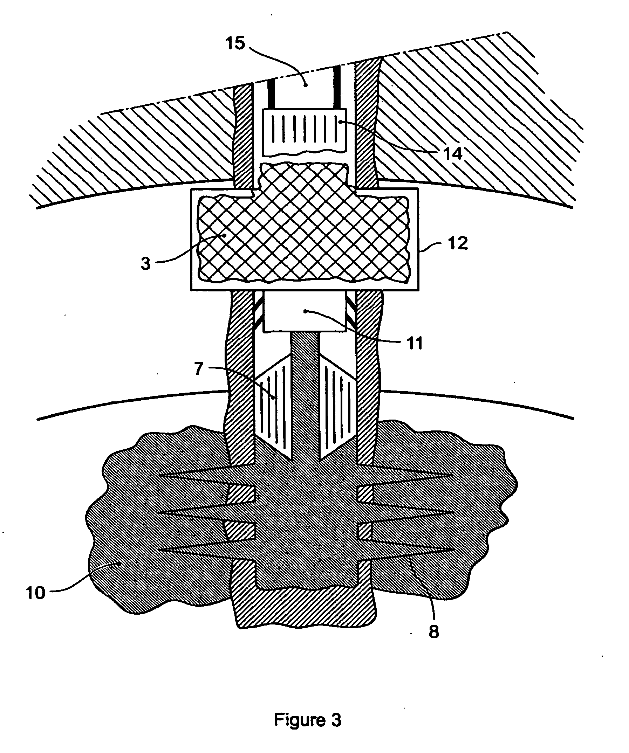

La figure 3 illustre le principe selon une mise en oeuvre de la présente invention. A une profondeur déterminée, par exemple au milieu de la couverture formant le toit du réservoir de stockage, et sur une hauteur convenue (par exemple 30 m), une fenêtre 12 est ouverte dans le cuvelage en réalisant un usinage ou alésage du cuvelage, de la cimentation primaire et de la formation géologique (couverture argileuse).

Cette opération d'alésage se fait à l'aide d'outil de forage aléseur, à bras télescopiques qui permettent d'être descendus dans le cuvelage puis d'élargir le puits en détruisant le casing, le ciment et la formation. Un fluide de circulation est utilisé pour le nettoyage des débris. L'ouverture de la fenêtre dans le cuvelage jusqu'à la formation argileuse peut être réalisée au moyen de faisceaux laser de puissance appropriée. Une autre option possible pour l'ouverture de la fenêtre est d'utiliser une découpeuse à plasma.

Après retrait de la garniture d'alésage, on procède à l'introduction des matériaux argileux 13 dans le puits au niveau de la fenêtre 12 à reboucher. Ces matériaux argileux peuvent se présenter sous la forme de boules, de boulettes, de billes, de granulés, de cylindres, de poudres ou un mélange de ces particules granulaires. Les granulométries et les formes (sphériques, ovoïdes,...) des matériaux argileux seront diverses et adaptées en fonction de l'application visée. Des formulations à base de boules, boulettes, cylindres, billes, granulés et poudres d'argiles, en association avec éventuellement d'autres minéraux (quartz, carbonates,...), seront préférées. Le volume de matériaux argileux doit être en excès par rapport au volume de la fenêtre 12 de façon qu'une certaine quantité d'argile soit présente dans le cuvelage.

Les particules argileuses se réhydratent au contact de l'eau contenue dans le puits. Différents procédés pourront être utilisés pour retarder et contrôler la cinétique de gonflement des argiles et donc in fine la formation de barrières étanches.

De manière à formuler des matériaux argileux destinés à former des barrières étanches qui soient compatibles avec les formations argileuses naturelles, une étape consiste à caractériser les roches couvertures lors du forage en analysant, soit des carottes de roches couvertures, soit des déblais de forage ("cuttings"). Les analyses peuvent consister en des études de minéralogie, des mesures de porosité, de perméabilité sur carottes, de perméabilité sur débris, de l'état de compaction des argiles, de l'indice de plasticité. Ces analyses permettront de sélectionner des matériaux argileux adéquats et de formuler avec ceux-ci des matériaux de bouchage compatibles avec les couvertures naturelles.

Dans une variante de l'invention, les formulations à base de matériaux argileux, en association avec éventuellement d'autres minéraux, pourront incorporer des déblais de forage des couvertures argileuses. Lors du forage des puits, ces déblais auront été conservés en vue de leur utilisation pour le bouchage des puits. Si le forage a été réalisé avec des fluides à base d'huile, ces déblais auront pu être nettoyés avec des fluides adaptés et notamment avec du CO₂ supercritique qui est connu pour être un excellent solvant.

Selon l'invention, plusieurs options peuvent être proposées pour la mise en place des matériaux argileux :
- les argiles, sous la forme de billes, boules, boulettes, cylindres, granulés peuvent être introduites directement dans le puits depuis la surface pour s'accumuler par gravité en fond de puits dans la zone de la fenêtre ouverte, un excédent de matériaux argileux par rapport au volume nécessaire sera prévu, en fonction de la configuration du puits, pour tenir compte d'une compaction des matériaux granulaires,
- on utilise une pompe (de préférence volumétrique) pour déplacer par circulation les particules de matériaux argileux mélangées à de l'eau ou un autre fluide.

Pour éviter un gonflement précoce des argiles, une option prévue dans le cadre de cette invention est d'enrober les particules d'argiles par un matériau de protection adéquat. Ce matériau peut être, par exemple, un film de polymère hydrosoluble à dissolution contrôlée qui retarde la mise en contact de l'eau avec les argiles, de façon à obtenir un délai suffisant pour être certain que l'hydratation se déroule à l'endroit voulu.

On peut citer comme polymère hydrosoluble :
- les polysaccharides, telles que les guar, amidon, cellulose, inuline, alginate, pectine, agar agar, gellane, carraghénane, pullulane, chitosane, gélatine, galactomannane, xanthane, scleroglucane, et leurs dérivés alkylés, carboxylés ou sulfonés, comme la carboxyméthyl-cellulose, la carboxymethylinuline, l'hydroxypropylguar,
- les polymères vinyliques hydrosolubles, polyvinyle acétate, alcool polyvinylique, polyvinylpyrrolidone, polyacrylamide, polyacrylamide partiellement hydrolysé, voire partiellement alkylé et/ou sulfoné, polyacrylate, polyoxyde d'éthylène, polyhydroxyéthylméthacrylate.

Les particules d'argiles, par exemple sous forme de poudres, peuvent être encapsulées dans des objets de tailles micrométriques ou sub-micrométriques. Ces capsules ou vecteurs de transport des matériaux argileux pourront se détruire sous l'effet d'un cisaillement important, d'une variation de pH, d'une variation de température, ou d'une variation de salinité. Cette destruction des capsules aura pour effet de mettre en contact les matériaux argileux avec l'eau.

Ainsi, l'expansion ou le gonflement ne commencera qu'une fois les matériaux argileux mis en place dans la fenêtre.

Le contrôle de la cinétique d'hydratation et de gonflement des matériaux argileux est essentiel pour la réussite de l'opération de constitution d'une barrière étanche. Si les argiles commencent leur processus d'hydratation lors de la descente par gravité dans le tubage ou durant le pompage et leur déplacement dans le train de tige, il y a risque d'un bouchage du puits en dehors de la zone prévue, ce qui peut avoir des conséquences graves et coûteuses pour la suite des opérations.

Selon l'invention, un excédent de matériaux à base d'argiles est prévu pour que le niveau des matériaux argileux remonte dans le tubage sur une certaine hauteur (cette hauteur sera à optimiser selon les puits, mais elle peut être estimée à environ 15 m). Cependant, le niveau des matériaux argileux ne doit pas remonter trop haut dans le tubage, ce qui peut rendre difficile voire impossible de les compacter correctement dans la fenêtre.

Une fois les matériaux argileux mis en place, le processus d'hydratation, qui s'accompagne de leur gonflement, peut commencer. Dans le cas où les matériaux argileux ont été mis en place grâce, ou en présence d'un fluide aqueux, il peut s'avérer nécessaire d'effectuer un compactage mécanique des argiles pour évacuer un excès d'eau. Ce compactage doit être de préférence permanent.

Plusieurs variantes sont proposées pour le compactage des bouchons de matériaux argileux.

La méthode la plus simple en terme opérationnel, de sécurité et de contrôle est de descendre un ensemble de masses tiges utilisées pour le forage des puits. L'extrémité de la masse tige comportera une embase 14 spécifique (figure 3).

Cette embase massive a un diamètre extérieur légèrement inférieur au plus petit diamètre intérieur du tubage pour éviter un risque de coincement (suivant les règles de la profession). Dans une variante, l'embase qui est vissée au bas de la première masse tige 15 comporte un ensemble de trous de diamètre compatible avec les tailles des particules argileuses utilisées de façon à permettre le passage de l'excédent d'eau associé aux matériaux argileux. Une autre variante utilise un matériau fritté, dit "filtre", suffisamment résistant sur le plan mécanique et solidaire d'un support reprenant l'effort appliqué suivant le concept d'un filtre-presse séparant une phase liquide d'un milieu poreux ou d'une suspension. Les matériaux argileux compactés de façon permanente et homogène constituent une couche étanche, pérenne, et de très faible perméabilité. De plus, cette barrière reconstituée présentera l'avantage d'être compatible chimiquement avec la formation géologique naturelle, avec pour corollaire l'existence d'une interface barrière argileuse/couvertures argileuses de bonne qualité, présentant une conductivité hydraulique du même ordre de grandeur que celui de massifs argileux.

Une fois les matériaux argileux compactés, le train de tiges peut être remonté, éventuellement en laissant en place de façon permanente les éléments de compactage, par exemple les masses tiges.

Pour un gain de temps et/ou de coûts opératoires, il peut être souhaitable de réaliser une seule opération de manoeuvre du train de tiges pour la mise en place des argiles, de son compactage, du maintien de ce compactage et de la remontée des tiges.

Le temps à partir de la constitution du mélange entre les billes d'argiles et le liant, de son déplacement dans le puits, de la mise en place dans la zone à traiter et du processus de filtration de l'excédent d'eau, est limité puisque il ne faut pas que les argiles se réhydratent avant leur mise en place au fond.

Pour cela, un mode opératoire particulier est proposé :
- assemblage en surface de la partie grille (14) comportant une vanne anti-retour vers le haut (de type "ball valve", "piston valve", "flapper valve"), des masses tiges, éventuellement d'un système d'ancrage type poussé qui fait que plus on applique un effort vers le bas plus le système a tendance à s'ancrer vers le bas et d'un système de déconnexion mécanique avec le train de tiges (type "quick release", "safety realease", "safety joint", filetage à gauche, pion de cisaillement ou hydraulique avec obturation provoqué par une bille envoyée depuis la surface).
- descente du train de tiges ainsi constitué, possibilité de descendre jusqu'au bas de la zone de découvert à colmater, pompage d'un bouchon d'eau suivi d'un volume contrôlé de matériaux argileux et de son liant, d'un deuxième bouchon déplacé par le pompage de l'eau. Cette technique de déplacement par bouchons successifs est connue des hommes de la profession, particulièrement lors de la cimentation et réparation de cimentation de tubages par "squeeze". Pour éviter un cisaillement excessif du fluide composé des particules de matériaux argileux et du liant, il est possible (souhaitable) d'utiliser, pour la phase de transfert de ce mélange entre le bac de préparation et l'intérieur de la tige, une pompe volumétrique de type "Progressive Cavity Pump" utilisée conventionnellement pour le pompage de fluides visqueux, tels que les ciments ou mortiers.
- une fois que le volume de matériaux argileux, déplacé dans le train de tiges, est arrivé au niveau de la cavité à remplir, (en surface, le volume d'eau pompé situé au-dessus du bouchon d'interface argile-eau donne de façon précise la position du bouchon d'argile dans le train de tiges puis dans la cavité à colmater, technique connue de l'homme du métier) le train de tiges est remonté pour remplir convenablement la cavité avec le matériau argileux, le volume d'eau équivalent remontant par l'annulaire. Le train de tiges est remonté jusqu'à remplir la cavité et le tubage supérieur, cela en fonction du volume d'argile prévu au départ. Un fois le matériau argileux mis en place, on redescend le train de tiges, la vanne anti-retour (type "ball valve", "piston valve" ou "flapper valve") se referme empêchant le fluide eau+argile de remonter dans le train de tige. On applique alors, depuis la surface, une force sur la base du "filtre" en descendant le train de tiges. Cette action permettra à la partie excédentaire d'eau de traverser ce filtre et ainsi de remonter par l'annulaire. Cette opération de descente contrôlée du train de tiges pour permettre la mise en compaction des argiles se fera de façon lente et progressive pour permettre à l'eau excédentaire de migrer vers le haut et de remonter par l'annulaire. Le volume de retour de fluide de filtration peut être mesuré en surface. La force appliquée sur le filtre est connue à partir du poids au crochet de maintien des tiges en surface. Cet effort connu pourra être progressif, le maximum de force appliquée au filtre sera le poids du train de tiges (tiges de forage et masses tiges dans l'eau du puits) lorsque les tiges de forage seront mises en compression c'est à dire "posées". Suivant une variante proposée, il est alors possible d'activer un ancrage vers le bas. Il existe des obturateurs annulaires fonctionnant suivant ce principe, activés par rotation droite ou gauche ou par cisaillement d'un pion qui active par "J slot" le mécanisme d'ancrage.
- une fois, les matériaux argileux mis en place, compactés et maintenus sous une compaction permanente et durable, on active le mécanisme pour désolidariser le train de tiges de la partie qui est laissée en fond de puits (l'ancrage, les masses tiges, le filtre). Il existe plusieurs systèmes de déconnexion du train de tiges de type "safety joint" ou filetage à gauche, ou une bille calibrée envoyée depuis la surface qui obture un passage ou par la mise en pression depuis la surface activant un système hydraulique fonctionnant par la différence de pression entre l'intérieur de la tige et l'annulaire pour rendre possible la déconnexion du train de tiges de la partie laissée au fond. La dernière étape consiste à remonter le train de tiges.

Les masses tiges peuvent être descendues unitairement en utilisant le câble du treuil de diagraphie. Une masse de 2000 kg à 2500 kg peut être manoeuvrée et descendue au câble de diagraphie.

Un outil de déconnexion commandé électriquement depuis la surface permettra de libérer le câble de la masse tige une fois posée.

On peut aussi concevoir des masses tiges de longueur et diamètre adaptés qui sont "lâchées" dans le puits depuis la surface. Le fluide dans le puits par effet de pistonnage ralentit la descente des masses. Cette variante présente l'avantage de ne pas utiliser de train de tiges, ce qui représente une diminution du coût, mais peut présenter une incertitude sur le résultat de compaction des matériaux argileux.

Des masses tiges en plomb de forme, diamètre, longueur et poids adaptés peuvent être empilées au-dessus des matériaux argileux pour assurer le compactage.

Des billes de plomb (grenaille de plomb) peuvent être introduites dans le puits depuis la surface.

Cette grenaille, de par son poids volumique dans l'eau, atteint le fond rapidement par gravité pour s'accumuler au-dessus de la grille, si elle est prévue, et ainsi appliquer par son poids une force et donc une pression aux matériaux argileux à compacter et applique un effort vertical de compression. Cette force dépend de plusieurs facteurs comme la hauteur de grenaille dans le tubage, du coefficient de remplissage des billes sphériques dans un cylindre (environ 70% du volume intérieur du tubage), de l'effet de voûte produit par la grenaille avec la paroi du tubage.

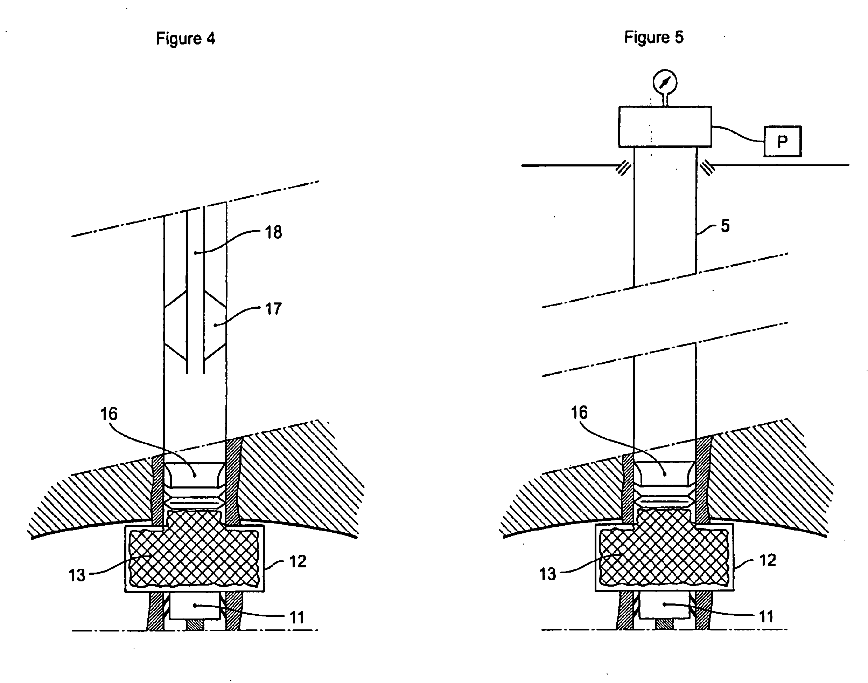

Dans une autre variante (figure 4 et 5), un piston 16 peut être disposé au-dessus des matériaux argileux. Compte tenu du mode d'action hydraulique dudit piston, cette variante ne permet pas à l'excédent d'eau contenu dans les argiles de pouvoir remonter par filtration dans le tubage.

La pression hydraulique peut être appliquée en montant en pression, à partir de la surface (figure 5), dans le tubage 5 (par exemple 40 b). Cette pression est intégralement transmise au piston qui appliquera une force de compression correspondante aux matériaux argileux.

La pression hydraulique peut aussi être appliquée dans le puits (figure 4) uniquement entre un obturateur 17 interne au cuvelage et le piston 16. Un train de tiges 18 descend l'obturateur interne, effectue l'ancrage et l'étanchéité. La mise en pression entre cet obturateur et le piston de compression est effectuée depuis la surface par l'intérieur du train de tiges.

Il est clair que la présente invention peut aussi s'appliquer au cas d'un puits non cuvelé au droit de la couche géologique couverture. Dans ce cas, le placement des produits argileux et son tassement devront être effectués au droit de cette couche, comme selon une variante de la présente invention.

## Revendications

1. Méthode d'obturation d'un puits foré dans une roche réservoir sous-jacente à une couche de roche argileuse constitutive d'une couverture, **caractérisée en ce qu'**on effectue les étapes suivantes :
- on identifie dans le puits le niveau de la couverture,
- on remplit ledit puits de particules de matériaux argileux au droit de ce niveau,
- on compacte lesdites particules de façon à reconstituer la couche constitutive de la couverture.

2. Méthode selon la revendication 1, dans laquelle on effectue un élargissement du puits au niveau de la couverture.

3. Méthode selon la revendication 2, dans laquelle ledit puits est cuvelé par un tube cimenté dans le puits, ledit élargissement consistant à ouvrir une fenêtre dans le cuvelage, détruire la cimentation et aléser la roche couverture sur une hauteur déterminée.

4. Méthode selon l'une des revendications précédentes, dans laquelle le fond du puits est obturé par du ciment.

5. Méthode selon l'une des revendications précédentes, dans laquelle lesdites particules de matériaux argileux sont compactées sous forme de billes, cylindres, poudres, granulés ou leurs mélanges.

6. Méthode selon l'une des revendications précédentes, dans laquelle lesdites particules de matériaux argileux sont mises en place dans l'élargissement dans un état déshydraté.

7. Méthode selon l'une des revendications précédentes, dans laquelle lesdites particules de matériaux argileux comportent des moyens de contrôle d'hydratation différée, tels des inhibiteurs de gonflement d'argiles ou des enrobages hydrosolubles.

8. Méthode selon l'une des revendications précédentes, dans laquelle lesdites particules de matériaux argileux sont compactées en cours de réhydratation.

9. Méthode selon l'une des revendications précédentes, dans laquelle lesdites particules de matériaux argileux sont compactées en utilisant des poids descendus dans le puits.

10. Méthode selon l'une des revendications précédentes, dans laquelle lesdites particules de matériaux argileux sont compactées en utilisant un piston disposé au-dessus des particules et activé par pression hydraulique dans le puits.

11. Méthode selon l'une des revendications précédentes, dans laquelle lesdites particules de matériaux argileux sont choisies à partir d'une caractérisation de la roche couverture par analyse chimique, minéralogique et pétrophysique des débris de forage.

12. Application de la méthode selon l'une des revendications précédentes au bouchage de puits d'injection de CO₂ dans un réservoir souterrain.

## Claims

1. A method of plugging a well drilled in a reservoir rock underlying a rock layer making up a cap rock, wherein the following stages are carried out:
- identifying in the well the cap rock level,
- filling said well with argillaceous material particles vertical to this level,
- compacting said particles so as to reconstitute the constituent layer of the cap rock.

2. A method as claimed in claim 1, wherein the well is widened at the level of the cap rock.

3. A method as claimed in claim 2, wherein said well is cased by a tube cemented in the well, said widening consisting in providing a window in the casing, in destroying the cementation and in reaming the cap rock over a predetermined height.

4. A method as claimed in any one of the previous claims, wherein the well bottom is plugged with cement.

5. A method as claimed in any one of the previous claims, wherein said argillaceous material particles are compacted in form of balls, cylinders, powders, granules or mixtures thereof.

6. A method as claimed in any one of the previous claims, wherein said argillaceous material particles are set in the widened portion in dehydrated state.

7. A method as claimed in any one of the previous claims, wherein said argillaceous material particles comprise deferred hydration control means, for example clay swelling inhibitors or hydrosoluble coatings.

8. A method as claimed in any one of the previous claims, wherein said argillaceous material particles are compacted during rehydration.

9. A method as claimed in any one of the previous claims, wherein said argillaceous material particles are compacted using weights lowered into the well.

10. A method as claimed in any one of the previous claims, wherein said argillaceous material particles are compacted using a piston arranged above the particles and actuated by hydraulic pressure in the well.

11. A method as claimed in ony one of the previous claims, wherein said argillaceous material particles are selected from characterization of the cap rock by chemical, mineralogical and petrophysical analysis of the cuttings.

12. Application of the method as claimed in any one of the previous claims to plugging of CO₂ injection wells in an underground reservoir.

## Patentansprüche

1. Verfahren zur Versiegelung eines Bohrbrunnens in einem Speichergestein, der unter einer Schicht aus Tongestein liegt, die eine Deckschicht bildet, **dadurch gekennzeichnet, dass** die folgenden Schritte durchgeführt werden:
- Identifizieren der Höhe der Deckschicht in dem Brunnen,
- Auffüllen des Brunnens mit Partikeln aus Tonmaterial bis direkt unter diese Höhe,
- Verdichten der Partikel, um die Schicht wiederherzustellen, die die Deckschicht bildet.

2. Verfahren nach Anspruch 1, wobei eine Vergrößerung des Brunnens in Höhe der Deckschicht durchgeführt wird.

3. Verfahren nach Anspruch 2, wobei der Brunnen mit einem Rohr ausgekleidet wird, das in den Brunnen zementiert wird, wobei die Vergrößerung darin besteht, ein Fenster in der Auskleidung zu öffnen, die Zementierung zu zerstören und das Deckgestein auf einer bestimmten Höhe aufzubohren.

4. Verfahren nach einem der vorhergehenden Ansprüche, wobei der Boden des Brunnens mit Zement verschlossen wird.

5. Verfahren nach einem der vorhergehenden Ansprüche, wobei die Partikel aus Tonmaterial in Form von Kugeln, Zylindern, Pulvern, Granulat oder deren Gemischen verdichtet werden.

6. Verfahren nach einem der vorhergehenden Ansprüche, wobei die Partikel aus Tonmaterial in der Vergrößerung in einem dehydratisierten Zustand angeordnet werden.

7. Verfahren nach einem der vorhergehenden Ansprüche, wobei die Partikel aus Tonmaterial Mittel zur Kontrolle der verzögerten Hydratation, wie etwa Hemmer des Quellverhaltens der Tone oder wasserlösliche Beschichtungen umfassen.

8. Verfahren nach einem der vorhergehenden Ansprüche, wobei die Partikel aus Tonmaterial während der Rehydratation verdichtet werden.

9. Verfahren nach einem der vorhergehenden Ansprüche, wobei die Partikel aus Tonmaterial unter Verwendung von Gewichten verdichtet werden, die in den Brunnen hinabgelassen werden.

10. Verfahren nach einem der vorhergehenden Ansprüche, wobei die Partikel aus Tonmaterial unter Verwendung eines Kolbens verdichtet werden, der oberhalb der Partikeln angeordnet ist und durch hydraulischen Druck in dem Brunnen aktiviert wird.

11. Verfahren nach einem der vorhergehenden Ansprüche, wobei die Partikel aus Tonmaterial ausgehend von einer Charakterisierung des Deckgesteins durch chemische, mineralogische und petrophysikalische Analyse von Bohrklein ausgewählt werden.

12. Anwendung des Verfahrens nach einem der vorhergehenden Ansprüche, zum Verschließen von CO₂-Injektionsbrunnen in einen unterirdischen Speicher.
